(19) Europäisches Patentamt
European Patent Office
Office européen des brevets

(11) Veröffentlichungsnummer: **0 003 285**
**B1**

(12) **EUROPÄISCHE PATENTSCHRIFT**

(21) Anmeldenummer: **79100058.1**

(22) Anmeldetag: **10.01.79**

(51) Int. Cl.³: **C 08 G 77/10,**
C 08 G 77/14

(54) **Verfahren zur Herstellung von siliciumfunktionellen Polyorganosiloxanen.**

(30) Priorität: **21.01.78 DE 2802668**

(43) Veröffentlichungstag der Anmeldung:
**08.08.79 Patentblatt 79/16**

(45) Bekanntmachung des Hinweises auf die Patenterteilung:
**11.02.81 Patentblatt 81/6**

(84) Benannte Vertragsstaaten:
**BE DE FR GB NL**

(56) Entgegenhaltungen:
**GB - A - 858 128**
**GB - A - 932 433**
**GB - A - 943 607**
**US - A - 2 486 992**
**US - A - 3 595 885**

(73) Patentinhaber: **BAYER AG**
**Zentralbereich Patente, Marken und Lizenzen**
**D-5090 Leverkusen 1, Bayerwerk (DE)**

(72) Erfinder: **de Montigny, Armand, Dr.**
**Walter-Flex-Strasse 17**
**D-5090 Leverkusen (DE)**
(72) Erfinder: **Moretto, Hans-Heinrich, Dr.**
**Formesstrasse 13**
**D-5000 Köln 80 (DE)**

**EP 0 003 285 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von siliciumfunktionellen Polyorganosiloxanen

Die vorliegende Erfindung betrifft die Herstellung von linearen bzw. verzweigten siliciumfunctionellen Polyorganosiloxanen durch Reaktion von Chlorsiloxanen oder Chlorsilanen mit linearen oder verzweigten Polyorganosiloxanen in Gegenwart einer Kombination aus katalytischen Mengen von nichtflüchtigen protonensauren Äquilibrierungskatalysatoren und einbasischen Carbonsäuren, wie z.B. Essigsäure oder Propionsäure.

Lineare und verzweigte siliciumfunktionelle Polyorganosiloxane, wie z.B. Siloxane mit endständigen Si-gebundenen Chloratomen oder Acetoxyresten sind Ausgangsprodukte für eine Vielzahl organopolysiloxanhaltiger Materialien, da sie sich zur Umsetzung mit reaktionsfähigen Wasserstoffatomen, wie sie z.B. in Alkoholen, Aminen und vielen weiteren Verbindungen vorliegen, eignen. So dienen sie u.a. zur Herstellung von Polyäther-Polysiloxan-Mischpolymeren, die durch ihre grenzflächenaktiven Eigenschaften weite technische Anwendung z.B. als Stabilisatoren zur Polyurethanschaumstoffherstellung gefunden haben, sowie anderer Blockmischpolymere. Die Versuche zur Herstellung von siliciumfunktionellen Polyorganosiloxanen konzentrieren sich bislang vor allem auf die Herstellung von sogenannten Chlorsiloxanen. So erfolgte die Herstellung von chlorhaltigen Organopolysiloxanen bisher entweder durch unvollständige Hydrolyse der Organochlorsilane (vgl. z.B. US - A - 2 381 366, DE - B - 1 174 509, DE - A - 2 345 923) oder durch Reaktion von Chlorsilanen mit vor allem cyclischen Siloxanen in Gegenwart von Katalysatoren wie z.B. $FeCl_3$ und/oder HCl (US - A - 2 421 653) oder Phosphinoxiden (US - A - 3 162 662). Auch quartäre Ammoniumsalze finden zur Ringöffnung von Cyclotrisiloxanen in Gegenwart von Chlorsilanen Verwendung, um zu Chlorsiloxanen zu gelangen (US - A - 3 162 662). Katalysatorgemische wie Halogenwasserstoff/protonsaurer Äquilibrierungskatalysator (DE - A - 2 453 482) oder Halogenwasserstoff/peralkyliertes Säureamid (DE--A - 2 353 166) sind in neuerer Zeit im Zusammenhang mit der Umsetzung von Organochlorsilanen mit Polyorganosiloxanen beschrieben worden.

Die hydrolytischen Verfahren weisen jedoch prinzipielle Nachteile auf. Die Zugabe des zur Hydrolyse benötigten Wassers zu den Chlorsilanen kann nicht beliebig schnell vorgenommen werden, so daß lange Reaktionszeiten die Folge sind. Dabei wird durch die gasförmig entweichende Salzsäure zusätzlich ein Teil der noch nicht umgesetzten Chlorsilane mitgerissen und führt so zu Verlusten und Schwierigkeiten bei der Reproduzierbarkeit der gewünschten Produkte. Zwangsläufig werden auch technisch aufwendige Anlagen zur Kondensation wenigstens eines Teiles der entweichenden Silane benötigt. Die meisten Verfahren verwenden zusätzlich noch kostspielige und feuergefährliche Lösungsmittel.

Bei einem Teil der bekannt gewordenen Reaktionen von Chlorsilanen mit Organosiloxanen, vornehmlich cyclischen Siloxanen, werden nur oligomere Chlorsiloxane bis zu maximal 10 siloxyeinheiten erhalten. Bei den Verfahren, die Phosphinoxide bzw. quartäre Ammoniumsalze als Katalysatoren einsetzen ist der Katalysator zwar in der Lage, die verwendeten cyclischen Siloxane zu öffnen und das Chlorsilane zu addieren, er erweist sich aber als unfähig, die Siloxanbindung in den entstandenen Chlorsiloxanen zu äquilibrieren. Die Kettenlänge bzw. das Molekulargewicht der Chlorsiloxane ist so durch die Ringgröße des cyclischen Siloxans praktisch vorgegeben.

Als weitere Nachteile seien vor allem auch die langen Reaktionszeiten und z.T. der Einsatz von Lösungsmitteln genannt.

Auch die Anwendung von Lewis-Säuren wie Eisen (III) chlorid, Eisen (III) chloridhexahydrat — mit oder ohne Chlorwasserstoff — wie in der US - A - 2 381 366 beschrieben, führt unter den erfindungsgemäßen Bedingungen nicht zu befriedigend äquilibrierten Chlorsiloxanen (DE - A - 2 453 482, vgl. Beispiel II und III).

Die Verwendung von Lewis-Säuren, vor allem Eisen (III) chlorid weist erhebliche Nachteile auf. Dieser Katalysator eignet sich schon deshalb nur für die Herstellung destillierbarer Chlorsiloxane, weil die Reaktionsgemische durch das gelöste $FeCl_3$ tiefdunkel gefärbt und damit für viele Einsatzzwecke ungeeignet sind. Eine wirtschaftliche Entfernung oder Desaktivierung dieses Katalysators ist schwierig, aber unbedingt notwendig. Die Anwesenheit von $FeCl_3$ gestattet nicht, höher molekulare Produkte wie üblich durch Ausheizen ((Ab)destillieren) von unerwünschten niedermolekularen, vor allem cyclischen Siloxananteilen zu befreien. Das vorhandene Eisen (III) chlorid bildet während des Ausheizprozesses und bei der folgenden Lagerung der Produkte dieser niedermolekularen Anteile entsprechend dem Gleichgewicht nach. (vg. DE - A - 2 453 482 Vergleichsbeispiel III). Auch die bekannten protonensauren Äquilibrierungskatalysatoren für Siloxane zeigen ihre äquilibrierende Wirkung bei der Umsetzung zwischen Chlorsilanen und Siloxanen nicht oder nicht reproduzierbar.

Wie in DE - A - 2 453 482 (Vergleichsbeispiel IV) gezeigt wurde, führt selbst der Einsatz der schnellsten bekannten protonensauren Äquilibrierungskatalysatoren für Siloxane, Perfluoralkansulfonsäuren nicht zu äquilibrierten Chlorsiloxanen; Katalysatorgemische (DE - A - 2 453 482 u. 2 353 166) erfordern zum Erzielen optimaler Ergebenisse im allgemeinen geschlossene Gefäße, um ein Entweichen der HCl zu vermeiden. Diese Verfahren eignen sich somit nicht, wenn auf Druckgefäße verzichtet werden soll.

Nach DE - B - 1 039 516 lassen sich acetoxyhaltige Polyorganosiloxane durch Reaktion von

Essigsäure bzw. deren Anhydrid mit Polyorganosiloxanen in Gegenwart von sauren Katalysatoren bei Temperaturen von 136—147°C in einer Reaktionszeit von 40 Stunden herstellen. Ein gravierender Nachteil dieses Verfahrens besteht darin, daß offensichtlich keine einheitlichen Produkte entstehen (vgl. DE - B - 1 218 446). Ein weiterer Nachteil ist in der Reaktionsdauer zu sehen.

Die Reaktion von Acetoxysilanen (DE - B - 1 218 446) mit Hexamethylcyclo- bzw. Octamethyltetracyclosiloxan in Gegenwart von Friedel-Crafts-Katalysatoren führt, wie Beispiel 2 zeigt, zu nicht äquilibrierten Produkten. Nichtcyclische Organosiloxane können nach diesem Verfahren nicht mit Acetoxysilanen in Reaktion gebracht werden.

Wird der Friedel-Crafts-Katalysator durch eine Säure ersetzt, so entstehen nach US - A - 3 322 722 ebenfalls acetoxyhaltige Polyorganosiloxane. Ein prinzipieller Nachteil dieses Verfahrens ist, daß als Ausgangskomponente (s. auch DE - B - 1 218 446) Acetoxyverbindungen eingesetzt werden, die oft als Festkörper (vgl. z.B. Methyltriacetoxysilan bzw. Tetraacetoxysilan) vorliegen und die immer gesondert hergestellt werden müssen. Ein weiterer wesentlicher Nachteil ist — wie in den Beispielen 1 u. 3 gezeigt — die beträchtliche Reaktionsdauer von 23 bzw. 36 Stunden bei Temperaturen um 100°C.

Aufgabe der vorliegenden Erfindung war es somit, ein Verfahren zu finden, das alle eingangs zitierten Nachteile nicht aufweist, d. h., das

1. auf großtechnisch anfallenden, gut handbaren Ausgangssubstanzen wie
   a) (Organo)chlorsilanen,
   b) linearen wie auch cyclischen Polyorganosiloxanen basiert,
2. ohne Druck und ohne eine, über eine normale Wasserkühlung hinausgehende Kühlung durchführbar ist,
3. Bei Temperaturen unter 140°C abläuft,
4. innerhalb von maximal 5 Stunden Reaktionsdauer durchführbar ist,
5. äquilibrierte, lineare oder verzweigte (auch tetrafunktionelle) gut reproduzierbare Verbindungen liefert,
6. ein Ausheizen des Endproduktes erlaubt, ohne daß dabei eine Zersetzung durch den noch anwesenden Äquilibrierungskatalysator erfolgt,
7. siliciumfunktionelle Produkte liefert die gut mit aktivem Wasserstoff aufweisenden Verbindungen zur Reaktion gebracht werden können.

Es wurde nun ein Verfahren gefunden, das allen obigen Anforderungen voll entspricht.

Durch Reaktion eines Chlorsilans mit Polyorganosiloxanen in Gegenwart von nichtflüchtigen protonensauren Äquilibrierungskatalysatoren können in einbasischen Carbonsäuren, insbesondere Eissigsäure bei Temperaturen bis zu 135°C in nahezu quantitativer Ausbeute, reproduzierbar (vgl. Bsp. 1—4), siliciumfunktionelle Polyorganosiloxane innerhalb kurzer Reaktionszeiten hergestellt werden.

Gegenstand der vorliegenden Erfindung ist somit ein Verfahren zur Herstellung von linearen und verzweigten, äquilibrierten gemischten acyloxyhaltigen und chlorhaltigen Organopolysiloxanen durch Umsetzung eines Chlorsilans der Formel

$$R_aR'_bSiCl_{(4-a-b)}$$

oder partiellen Hydrolysaten hiervon, wobei

$$a = 0,\ 1,\ 2 \text{ oder } 3,$$

$$b = 0,\ 1,\ 2 \text{ oder } 3$$

und a + b höchstens 3 ist, mit einem oder mehreren Organosiloxanen, die folgende Bausteine in gegebenenfalls wechselnder Anordnung aufweisen können,

$$[R_2R''{-}SiO_{1/2}]\ [RR''{-}SiO]\ [R''{-}SiO_{3/2}]\ [SiO_2]$$

wobei R und R′ unabhängig voneinander Wasserstoff, ein aliphatischer, aromatischer, gesättigter oder ungesättigter, gegebenenfalls halogen- oder cyansubstituierter einwertiger Kohlenwasserstoffrest mit bis zu 18 C-Atomen ist und R″ Chlor oder Hydroxyl ist, oder die bei R und R′ angegebene Bedeutung hat, in solchen Mengenverhältnissen, daß die Zahl aller Si—Cl-Gruppen stets die Zahl aller Si—OH-Gruppen übersteigt, welches dadurch gekennzeichnet ist, daß die Reaktion in Gegenwart einer Kombination aus einem an sich bekannten protonensauren Äquilibrierungskatalysator für Siloxane und — bezogen auf die siliciumgebundenen Chloratome — der mindestens 1,1-fachen molaren Menge an konzentrierter einbasischer Carbonsäure, insbesondere Essigsäure bei Temperaturen bis maximal 135°C, durchgeführt wird.

Die Wahl der in Frage kommenden Äquilibrierungskatalysatoren wie z.B. Schwefelsäure, Perfluorsulfonsäuren, Bleicherden usw. richtet sich nach den gewünschten Reaktionsbedingungen und Eigenschaften der Reaktionsprodukte. Bevorzugt werden Perfluoralkansulfonsäuren

$$R_FSO_3H$$

wobei $R_F$ ein perfluorierter Alkylrest mit bis zu 10 C-Atomen ist, in Mengen von 0,05 bis 1 Gew.-%, bevorzugt 0,2—0,5 Gew.-% eingesetzt. Als $R_F$-Rest können z.B. der $CF_3$-, der $C_4F_9$-, $C_8F_{17}$-Rest stehen. Ein bevorzugter $R_F$-Rest ist der Perfluorbutanrest. Die %-Angaben beziehen sich auf die vorliegenden Siliciumverbindungen.

Als Silane kommen in Frage: Trimethylchlorsilan, Dimethylvinylchlorsilan, Dimethylphenylchlorsilan, Chlorpropyldimethylchlorsilan, Chlormethyldimethylchlorsilan, Brommethyldimethylchlorsilan, Dimethyldichlorsilan, Methylvinyldichlorsilan, Methylphenyldichlorsilan, 3,3,3-Trifluorpropylmethyldichlorsilan, Diphenyldichlorsilan, Chlorpropylmethyldichlorsilan, Methyltrichlorsilan, Chlormethylmethyldichlorsilan, Brommethylmethyldichlorsilan, Methyltrichlorsilan, Chlormethyltrichlorsilan, Vinyltrichlorsilan, Phenyltrichlorsilan und Siliciumtetrachlorid.

Als Siloxane eignen sich bevorzugt die direkten Hydrolysate des Dimethyldichlorsilans, wie sie großtechnisch als Vorstufe zur Erzeugung der Cyclosiloxane anfallen, sowie die Cyclosiloxane:

$$(RR'—SiO)_n \text{ mit } n = 3 \text{ bis } 5, \text{ wobei}$$

R und R' die bereits genannte Bedeutung besitzen. In Frage kommen vor allem auch beliebige lineare und verzweigte Siloxane, deren Herstellung dem Fachmann geläufig ist. Diese Siloxane können ebenfalls siliciumfunktionelle wie Si—OH oder Si—Cl Gruppen oder auch seitenständige organofunktionelle Gruppen, wie Si-vinyl, $—Si—CH_2Cl$ usw. enthalten.

Die Reaktion wird im allgemeinen in der Weise durchgeführt, daß man das Organopolysiloxan mit den berechneten Mengen an Chlorsilan vermischt. Anschließend wird der Katalysator zugegeben. Das Gemisch wird daraufhin erwärmt, vorzugsweise auf etwa 50—90°C. Mit Hilfe eines z.B. dem Kühler nachgeschalteten Blorenzählers, kann man eine leichte HCl-Entwicklung feststellen, während die Viskosität des Kolbeninhalts etwas ansteigt. Ist die gewünschte Temperatur erreicht, wird die gewählte Carbonsäure — bei weiterem Erhitzen so zugesetzt, daß die HCl-Entwicklung nicht außer Kontrolle gerät. Ist die Carbonsäure vollständig zugegeben, rührt man ca. 1—2 Stunden bei 120—130°C und destilliert anschließend flüchtiges Material (z.B. bis 130°C bei ca. 67 mbar) ab.

Der Rückstand, der je nach Qualität der eingesetzten Materialien farblos und wasserklar bis leicht gelblich aussehen kann, ist eine bewegliche stark wasserempfindliche Flüssigkeit. Die Carbonsäuren sollen weitestegehend rein sein und keine Verbindungen enthalten, die z.B. mit SiCl-bzw. SiOAc-Gruppierungen Reaktionen eingehen können.

Die Äquilibrierungsreaktion kommt nach der Entfernung der Carbonsäure (im Vakuum) sofort zum Stehen. Das Ausheizen niedermolekularer Anteile, wie z.B. Octamethylcyclotetrasiloxan wird somit problemlos.

Aufgrund der günstigen Reaktionsbedingungen, sowie der kurzen Reaktionszeiten, ist eine kontinuierliche Herstellung ohne weiteres möglich. Als einbasische Carbonsäuren können z.B. Essigsäure, Propionsäure oder auch höhere Carbonsäuren eingesetzt werden. Bevorzugt wird jedoch Essigsäure.

Die vorliegende Erfindung wird durch die nachfolgenden Beispiele näher erläutert (%-Angaben beziehen sich — soweit nicht anders vermerkt — auf Gew.-%; D bedeutet eine difunktionelle Einheit $—OSi(R_2)—$ und Ac steht für den Acetylrest).

In den Beispielen werden die Restchlorgehalte der Übersicht wegen zum Teil nicht angegeben. Sie bewegen sich zwischen etwa 0,2—3,0%. Sie wurden zum Teil jeweils in die entsprechenden Acetoxywerte umgerechnet.

Beispiel 1—4

444 g [1,5 Mol] Octamethylcyclotetrasiloxan [$D_4$] werden mit 129 g [1 Mol] Dimethylchlorsilan und 1,7 g [0,3%] Perfluorbutansulfonsäure versetzt und gemischt. Anschließend wird auf 90°C erhitzt und innerhalb von 30 Minuten werden 240 g [4,0 Mol] Essigsäure zugegeben. Nach vollendeter Zugabe wird die Temperatur auf 125—130°C erhöht. Bei dieser Temperatur wird ca. 2 Stunden gerührt. Anschließend wird bis 90°C (Sumpftemperatur) und 20 mbar ausgeheizt. Der Rückstand ist eine klare bewegliche Flüssigkeit.

Ergebnisse siehe Tabelle 1.

TABELLE 1

| Beispiel [Nr] | 1 | 2 | 3 | 4 |
| --- | --- | --- | --- | --- |
| Ausbeute [g] | 597 | 595 | 596 | 601 |
| OAc [%] | 18,2 | 18,24 | 18,1 | 18,6 |
| Viskosität $^{20}$[mPa.s] | 6,85 | 6,90 | 6,85 | 6,90 |
| Gaschromatogramme des verdampften Anteils (= vD) vD [%] | 63,73 | 63,58 | 68,96 | 66,05 |
| $D_4$ [%] | 4,56 | 4,0 | 3,9 | 4,2 |
| $D_5$ [%] | 2,90 | 2,9 | 3,7 | 3,0 |
| $D_6$ [%] | 0,75 | 1,1 | 1,1 | 1,0 |
| $D_7$ [%] | 0,40 | 0,7 | 0,8 | 0,8 |
| $AcOD_nAc$ n = 1 [%] | 0,96 | 1,14 | 1,27 | 1,29 |
| n = 2 [%] | 8,72 | 8,60 | 8,51 | 8,52 |
| n = 3 [%] | 12,68 | 12,11 | 11,35 | 12,19 |
| n = 4 [%] | 11,46 | 10,96 | 10,75 | 10,78 |
| n = 5 [%] | 10,41 | 10,01 | 10,13 | 9,75 |
| n = 6 [%] | 9,36 | 8,97 | 9,02 | 8,95 |

TABELLE 1 (Fortsetzung)

| Beispiel [Nr.] | 1 | 2 | 3 | 4 |
|---|---|---|---|---|
| n = 7 [%] | 8,34 | 7,98 | 7,87 | 7,72 |
| n = 8 [%] | 7,04 | 6,91 | 6,86 | 6,60 |
| n = 9 [%] | 5,81 | 5,73 | 5,46 | 5,50 |
| n = 10 [%] | 4,47 | 4,64 | 4,50 | 4,32 |
| n = 11 [%] | 3,41 | 3,80 | 3,88 | 3,51 |
| n = 12 [%] etc. | 3,26 | 2,98 | 3,1 | 2,65 |

Die in geringen Mengen vorliegenden Chlorsiloxane wurden bei der Auswertung des GC nicht berücksichtigt.

Beispiel 5—6

598 g [4 Mol] Methyltrichlorsilan werden mit 4440 g [15 Mol] $D_4$, 1200 g [20 Mol] Essigsäure und 15,12 g [0,3%] Perfluorbutansulfonsäure wie in Beispiel 1—4 umgesetzt.

| Versuch Nr. | Ausbeute [g] | Acetat [%] |
|---|---|---|
| 5 | 5097,3 | 12,65 |
| 6 | 5054,6 | 15,52 |

Beispiel 7

1/10 des Ansatzes aus Beispiel 5 wurde wie in diesem Beispiel umgesetzt. Die Ausheizbedingungen waren jedoch folgende:

Sumpftemperatur: 130°C
Druck 67 mbar

Ausbeute: 511 g
Acetat: 12,22%

Beispiel 8

888 g [3 Mol] $D_4$ werden auf 50°C erwärmt; anschließend werden, 3,4 g [0,33%] Perfluorbutansulfonsäure zugegeben. Nach 45 sek. ist eine Viskositätszunahme wahrnehmbar. Nun werden 149,5 g [1 Mol] Methyltrichlorsilan zugesetzt und nach weiteren 5 Minuten 300 g [5 Mol] Essigsäure. Es wird langsam aufgeheizt. Ab 100°C ist ein Rückfluß feststellbar. Innerhalb einer Stunde wird die Temperatur auf 130°C gesteigert. Bei dieser Temperatur wird 2 Stunden gerührt. Anschließend wird bei 130°C und 67 mbar ausgeheizt.

Ausbeute: 1025 g
Acetat: 14,77%

Beispiele 9—10

299 g [2 Mol] Methyltrichlorsilan werden mit 2664 g [9 Mol] $D_4$, 600 g [10 Mol] Essigsäure und 9 g [0,3%] Perfluorbutansulfonsäure verrührt. Das Gemisch wird vorsichtig aufgeheizt, so daß der entweichende HCl-Strom mittels eines Liebigskühlers kontrollierbar bleibt. Nach etwa 2 Stunden sind 130°C erreicht. Bei dieser Temperatur wird noch 2 Stunden gerührt. Anschließend wird bei 130°C und 67 mbar ausgeheizt.

| Versuch Nr. | Ausbeute [g] | Acetat [%] |
|---|---|---|
| 9 | 2979,6 | 10,9 |
| 10 | 2962,9 | 11,2 |

Beispiel 11

299 g [2 Mol] Methyltrichlorsilan werden mit 9 g [0,3%] Perfluorbutansulfonsäure und anschließend mit 2664 g [9 Mol] $D_4$ versetzt. Das Gemisch wird anschließend auf 90°C aufgeheizt und innerhalb 2 Stunden mit 600 g [10 Mol] Essigsäure versetzt. Während der Zugabe wird weiter hochgeheizt so daß nach vollendeter Zugabe [HCl-Strom versiegt] die Temperatur von 130°C erreicht wird. Es wird anschließend 2 Stunden bei 130°C gerührt. Ausgeheizt wird bei 130°C und 67 mbar.

Ausbeute: 2949,7 g
Acetat: 11,1%

Beispiel 12

448,5 g [3 Mol] Methyltrichlorsilan und 4662 g [63 Mol] $D_4$ werden gemischt und mit 17 g [0,33%] Perfluorbutansulfonsäure versetzt und innerhalb 30 Minuten auf 90°C erhitzt. Über 3 Stunden verteilt werden 1500 g [25 Mol] Essigsäure zugesetzt. Während der Zugabe wird die Temperatur auf 130°C gebracht. Anschließend wird bei 130°C und 67 mbar abdestilliert.

Ausbeute: 5033 g
Acetat: 9,87%

Beispiel 13

*Versuch a*

1000 g eines Hydrolysats von Dimethyldichlorsilan mit etwa 600 mval OH, stammend aus $H_2O$ und SiOH werden mit 19,35 g [0,15 Mol] Dimethyldichlorsilan 3,4 g Perfluorbutansulfonsäure und 300 g Essigsäure versetzt und in 30 Minuten auf 90°C aufgeheizt. Innerhalb einer Stunde werden 117 g [0,78 Mol] Methyltrichlorsilan unter Erhöhung der Temperatur zugegeben. Nach vollendeter Zugabe wird 2 Stunden am Rückfluß gekocht. Es wird bei 130°C und 67 mbar ausgeheizt.

*Versuch b*

Obiger Versuch wird wiederholt, jedoch mit der Ausnahme, daß 38,7 g [0,3 Mol] Dimethyldichlorsilan zugegeben werden.

*Versuch c*

Versuch a wurde so durchgeführt, daß kein Dimethyldichlorsilan zugegeben wird und somit OH nicht berücksichtigt wird.

Ergebnisse:

| Versuch-Nr. | 13 a | 13 b | 13 c |
|---|---|---|---|
| Ausbeute [g] | 1100 g | 1130 | 1100 |
| Acetat [%] | 10,6 | 11,5 | 9,1 |

Beispiel 14

500 g eines höhermolekularen $\alpha,\omega$-Polydimethylsiloxandiols der Viskosität $\eta^{20} = 600$ cP [6,76 Mol $(CH_3)_2SiO$] werden mit 145 g [1,13 Mol] Dimethyldichlorsilan und 2 g Perfluorbutansulfonsäure vermischt und mit 270 g Essigsäure versetzt. Es wird zügig auf ca. 100°C erwärmt. Bei Temperaturen von 100—130°C wird anschließend ca. 3 Stunden gerührt. Es wird bei 90°C und 20 mbar ausgeheizt. Der OH-Gehalt des Siloxandiols wird nicht berücksichtigt.

Ausbeute: 651 g
Viskosität: 7,3 cP
Acetat: 16,73%

GC des verdampfbaren Anteils (= 48,88%)

$D_4$: 6,60%
$D_5$: 3,93%
$D_6$: 0,97%
$D_7$ 0,19%
$AcOD_nAc$
n=1: 0,70%
n=2: 8,07%
n=3: 11,44%
n=4: 11,71%
n=5: 11,06%
n=6: 9,60%
n=7: 7,72%
n=8: 6,25
n=9: 4,82
etc.

Beispiel 15

170 g [1 Mol] Siliciumtetrachlorid werden mit 1184 g [4 Mol] Octamethyltetracyclosiloxan und 4,062 g Perfluorbutansulfonsäure gemischt und auf 90°C erhitzt. Es wird anschließend — unter gleichzeitigem vorsichtigen Aufheizen — 600 g Essigsäure über 1 Stunde verteilt, zugegeben. Es wird ca. 2 Stunden bei 125°C gerührt. Ausgeheizt wird bei 105°C und 28 mbar. Es entsteht eine wasserklare bewegliche Flüssigkeit.

Ausbeute: 1387 g

Acetat: 14,06%

Beispiel 16

149,5 g [1,0 Mol] Methyltrichlorsilan werden mit 1110 g [3,75 Mol] Octamethyltetracyclosiloxan und 7,6 g $H_2SO_4$ conc. [0,6%, bezogen auf die Siliciumverbindungen] vermischt. Zu dieser Mischung werden 60 g Essigsäure gegeben und anschließend wird innerhalb 1/2 Stunde auf ca. 125°C erhitzt. Bei dieser Temperatur werden in 40 Minuten 340 g Essigsäure gegeben. Anschließend wird zwei Stunden bei 125°C gerührt. Es wird bei 100°C und 20 mbar ausgeheizt. Es entsteht eine leicht opaleszierende bewegliche Flüssigkeit.

Ausbeute: 1213,9 g
Acetat: 9,8%
Chlorid: 0,31%
Sulfat: 0,59%

Beispiel 17

149,5 g [1,0 Mol] Methyltrichlorsilan werden mit 1110 g [3,75 Mol] Octamethyltetracyclosiloxan und 3,6 g [0,28%] Perfluorbutansulfonsäure vermischt. Es wird innerhalb 20 Minuten auf 60°C erhitzt. Ab dieser Temperatur werden innerhalb 2 Stunden, und unter weiteren Erhitzen, 300 g [~4 Mol] Propionsäure zugesetzt. Während dieser Zugabe wird nach ca. 18 die Temperatur von 120°C erreicht. Anschließend wird 1.5 St. bei 130°C gerührt.

Es wird bei 140°C und ca. 7 mbar ausgeheizt. Zurück bleibt eine klare bewegliche, farblose Flüssigkeit.

Ausbeute: 1210 g
$CH_3CH_2CO$: 9,95%
Cl: 2,10%

**Patentansprüche**

1. Verfahren zur Herstellung von linearen und verzweigten äquilibrierten acyloxyhaltigen Organopolysiloxanen durch Umsetzen eines Chlorsilans der Formel

$$R_aR'_bSiCl_{(4-a-b)}$$

oder partiellen Hydrolysaten hiervon, wobei

a = 0, 1, 2 oder 3
b = 0, 1, 2 oder 3
und a + b höchstens 3 ist,

mit einem oder mehreren Organosiloxanen, die folgende Bausteine in gegebenenfalls wechselnder Anordnung aufweisen können,

$$[R_2R''—SiO_{1/2}]\ [RR''—SiO]\ [R''—SiO_{3/2}]\ [SiO_2]$$

wobei R und R' — gleich oder verschieden — Wasserstoff, ein aliphatischer, aromatischer, gesättigter oder ungesättigter, gegebenenfalls halogen — oder cyansubstituierter einwertiger Kohlenwasserstoffrest mit bis zu 18 C-Atomen ist und R'' Chlor oder Hydroxyl ist, oder die bei R und R' angegebene Bedeutung hat, in solchen Mengenverhältnissen, daß die Zahl aller Si—Cl-Gruppen stets die Zahl aller Si—OH-Gruppen übersteigt, welches dadurch gekennzeichnet ist, daß die Reaktion in Gegenwart einer Kombination aus einem an sich bekannten protonensauren Äquilibrierungskatalysator für Siloxane und — bezogen auf die siliciumgebundenen Chloratome — der mindestnes 1,1-fachen molaren Menge an einbasischer Carbonsäure, insbesondere Essigsäure bei Temperaturen bis maximal 135°C durchgeführt wird.

2. Verfahren nach dem Anspruch 1, dadurch gekennzeichnet, daß als Katalysatoren Perfluoralkansulfonsäuren in Mengen von 0,05 bis 1,5 Gew.-% eingesetzt werden.

3. Verfahren nach dem Anspruch 2, dadurch gekennzeichnet, daß als Katalysator Perfluorbutansulfonsäure in Mengen von 0,2 bis 0,4 Gew.-% eingesetzt wird.

**Revendications**

1. Procédé de production d'organopolysiloxanes porteurs de groupes acyloxy, équilibrés, linéaires et ramifiés, par réaction d'un chlorosilane de formule:

$$R_aR'_bSiCl_{(4-a-b)}$$

ou d'hydrolysats partiels correspondants, formule dans laquelle:

*a* = 0, 1, 2 ou 3
*b* = 0, 1, 2 ou 3, et

la somme *a* + *b* est au maximum égale à 3,
avec un ou plusieurs organosiloxanes qui peuvent présenter les motifs suivants, éventuellement avec und disposition variable,

$$[R_2R''—SiO_{1/2}]\ [RR''—SiO]\ [R''—SiO_{3/2}]\ [SiO_2]$$

où R et R' — égaux ou différents — représentent l'hydrogène, und reste hydrocarboné monovalent aliphatique, aromatique, saturé ou insaturé, éventuellement substitué par un halogène ou le groupe cyano, ayant jusqu'à 18 atomes de carbone, et R'' est le chlore ou un groupe hydroxyle ou a la définition donnée pour R et R', dans des rapports quantitatifs choisis de manière que le nombre total de groupes Si—Cl soit toujours supérieur au nombre total de groupes Si—OH, caractérisé en ce que la réaction est conduite en présence d'une association d'un catalyseur protonique acide d'équilibrage connu pour des siloxanes et — par rapport aux atomes de chlore liés au silicium — d'au moins, 1,1 fois la quantité molaire d'un acide monocarboxylique, notamment l'acide acétique, à des températures atteignant au maximum 135°C.

2. Procédé suivant la revendication 1, caractérisé en ce qu'on utilise comme catalyseurs des acides perfluoralcanes sulfoniques en quantités de 0,05 à 1,5% en poids.

3. Procédé suivant la revendication 2, caractérisé en ce qu'on utilise comme catalyseur l'acide perfluorobutane — sulfonique en quantités de 0,2 à 0,4% en poids.

**Claims**

1. A process for the preparation of linear and branched equilibrated acyloxy-containing organopolysiloxanes by reacting a chlorosilane of the formula

$$R_aR'_bSiCl_{(4-a-b)}$$

wherein

a = 0, 1, 2 or 3,
b = 0, 1, 2 or 3 and
a + b is at most 3,

or partial hydrolysis products thereof, with one or more organosiloxanes which can contain, in appropriately alternating arrangement, the following units

$$[R_2R''—SiO_{1/2}]\ [RR''—SiO]\ [R''—SiO_{3/2}]\ [SiO_2]$$

wherein R and R' — identical or different — are hydrogen, an aliphatic, aromatic, saturated or unsaturated, optionally halogen-substituted or cyano-substituted monovalent hydrocarbon radical with up to 18 C atoms and R" is chlorine or hydroxyl, or has the meaning indicated for R and R', in proportions such that the number of all the Si—Cl groups always exceeds the number of all the Si—OH groups, which is characterised in that the reaction is carried out in the presence of a combination of a known protonic acid equilibration catalyst for siloxanes, and, relative to the silicon-bonded chlorine atoms, at least 1.1 times the molar amount of a monobasic carboxylic acid, in particular acetic acid at temperatures of at most 135°C.

2. A process according to claim 1, characterised in that perfluoroalkanesulphonic acids are employed as catalysts in amounts of 0.05 to 1.5% by weight.

3. A process according to claim 1, characterised in that perfluorobutanesulphonic acid is employed as the catalyst, in amounts of 0.2 to 0.4% by weight.